**Europäisches Patentamt**

**European Patent Office**

**Office européen des brevets**

(19)

(11) Veröffentlichungsnummer : **0 085 442**
**B1**

(12) **EUROPÄISCHE PATENTSCHRIFT**

(45) Veröffentlichungstag der Patentschrift :
**16.04.86**

(21) Anmeldenummer : **83200001.2**

(22) Anmeldetag : **03.01.83**

(51) Int. Cl.⁴ : **G 11 B 23/04, G 11 B 23/50**

(54) **Magnetbandkassette.**

(30) Priorität : **07.01.82 AT 33/82**

(43) Veröffentlichungstag der Anmeldung :
**10.08.83 Patentblatt 83/32**

(45) Bekanntmachung des Hinweises auf die Patenterteilung : **16.04.86 Patentblatt 86/16**

(84) Benannte Vertragsstaaten :
**AT DE FR GB IT**

(56) Entgegenhaltungen :
**DE-A- 3 010 772**
**DE-C- 969 823**
**DE-U- 7 124 132**
**DE-U- 8 137 551**
**US-A- 3 601 654**
**Patent Abstracts of Japan Band 3, Nr. 81, 12. Juli 1979, Seite 135E122 & JP-A-54-59122**

(73) Patentinhaber : **N.V. Philips' Gloeilampenfabrieken**
**Groenewoudseweg 1**
**NL-5621 BA Eindhoven (NL)**

(72) Erfinder : **Jäger, Lothar**
**INT. OCTROOIBUREAU B.V. p/A Prof. Holstlaan 6**
**NL-5656 AA Eindhoven (NL)**
Erfinder : **Peter, Anton**
**INT. OCTROOIBUREAU B.V. p/A Prof. Holstlaan 6**
**NL-5656 AA Eindhoven (NL)**
Erfinder : **Winkler, Reinhard**
**INT. OCTROOIBUREAU B.V. p/A Prof. Holstlaan 6**
**NL-5656 AA Eindhoven (NL)**

(74) Vertreter : **Van Weele, Paul Johannes Frits et al**
**INTERNATIONAAL OCTROOIBUREAU B.V. Prof. Holstlaan 6**
**NL-5656 AA Eindhoven (NL)**

## Beschreibung

Die Erfindung betrifft eine Magnetbandkassette für ein Magnetbandgerät, die mindestens eine elektrisch leitende, mit einem begrenzten Spiel beweglich angeordnete, zylinderförmige, mit mindestens einer von ausserhalb der Magnetbandkassette zugänglichen und axial verlaufenden Ausnehmung versehene Bandführung aufweist, über deren Mantelfläche abschnittsweise das Magnetband mit seiner Trägerseite verläuft, wobei bei in das Magnetbandgerät eingesetzter Magnetbandkassette die Bandführung mit ihrer Ausnehmung auf einem geräteseitigen, elektrisch leitenden am geräteseitigen Bezugspotential liegenden Positionierstift sitzt und wobei der Bandführung ein elektrisch leitendes Federelement zugeordnet ist. Eine derartige Magnetbandkassette ist beispielsweise in der DE-OS 2 934 224 beschrieben, in der auch angegeben ist, auf welche Art und Weise die Magnetbandkassette in das Magnetbandgerät eingesetzt, also in ihre Betriebslage gebracht werden kann, wobei dann ein geräteseitiger Positionierstift in die Ausnehmung der Bandführung eindringt, so dass sie in ihrer Lage genau festgelegt wird, was bekanntlich für einen exakten Bandlauf sehr wichtig ist.

Bei derartigen Magnetbandkassetten besteht das bekannte Problem, dass sich die Schichtseite des Magnetbandes elektrostatisch aufladen kann, was dann im Betrieb Schwierigkeiten mit sich bringt. Um solche elektrostatische Aufladungen wieder abzuführen, wurde gemäss der DE-OS 3 010 772 bereits vorgeschlagen, innerhalb der Kassette ein Erdanschlussglied vorzusehen, welches einerseits an der Schichtseite des Magnetbandes anliegt und das andererseits beim Einsetzen der Magnetbandkassette in das Magnetbandgerät, von ausserhalb der Magnetbandkassette her, mit einem elektrisch leitenden am Bezugspotential liegenden Bauteil des Gerätes in elektrisch leitenden Kontakt tritt. In dieser DE-OS 3 010 772 werden hierzu einige konstruktive Ausführungsformen angegeben, wobei eine darin besteht, in der Magnetbandkassette ein elektrisch leitendes streifenförmiges Federelement anzuordnen, das mit einem Ende auf die Schichtseite des zwischen zwei Bandführungen verlaufenden Magnetbandes drückt und das mit seinem anderen Ende durch eine Oeffnung in einer Seitenwand der Magnetbandkassette herausragt, so dass dieses andere Ende, beim Einsetzen der Magnetbandkassette in das Magnetbandgerät, mit einer geräteseitigen Blattfeder in elektrisch leitenden Kontakt treten kann. Eine andere Ausführungsform sieht vor, dass in der Magnetbandkassette ein schwenkbarer Hebel angeordnet ist, der mit einem stiftförmigen Ende mit der Schichtseite des zwischen zwei Bandführungen verlaufenden Magnetbandes in Berührung steht und der mit seinem anderen Ende, beim Einsetzen der Magnetbandkassette in das Magnetbandgerät, mit einem dabei in die Magnetbandkassette eintretenden Positionierstift in elektrisch leitenden Kontakt kommt, wobei dieser Positionierstift zum Positionieren der gesamten Magnetbandkassette dient. Wie ersichtlich, sind die in dieser DE-OS 3 010 772 vorgeschlagenen Massnahmen zur Abführung einer elektrostatischen Aufladung von der Schichtseite des Magnetbandes relativ kompliziert und aufwendig, was gerade im vorliegenden Fall als besonders nachteilig anzusehen ist, da es sich bei solchen Magnetbandkassetten um Massenprodukte handelt, die möglichst preisgünstig sein sollen.

Die Erfindung hat sich daher zur Aufgabe gestellt, bei einer Magnetbandkassette der eingangs angeführten Gattung eine elektrostatische Aufladung der Schichtseite des Magnetbandes auf besonders einfache Art und Weise wieder abzuführen. Erfindungsgemäss ist hierzu vorgesehen, dass das Federelement der Schichtseite des Magnetbandes gegenüberliegend innerhalb der Magnetbandkassette angeordnet ist und mindestens zwei Abschnitte aufweist, von welchen einer im Bereich der Bandführung an der Schichtseite des Magnetbandes anliegt und der andere in elektrisch leitendem Kontakt mit der Bandführung steht. Auf diese Weise wird die bereits in der Magnetbandkassette vorhandene und bei in das Magnetbandgerät eingesetzter Magnetbandkassette mit einem geräteseitigen Positionierstift zusammenwirkende Bandführung zur Herstellung des elektrisch leitenden Kontaktes zu einem Federelement herangezogen, das seinerseits einen elektrisch leitenden Kontakt zwischen der Bandführung und der Schichtseite des Magnetbandes herstellt. Bis auf das Federelement, das in seinem Aufbau sehr einfach sein kann, werden daher nur bereits vorhandene Bauteile zur Lösung der gestellten Aufgabe verwendet, so dass der beschrittene Lösungsweg insgesamt gesehen konstruktiv sehr einfach ist. Dadurch dass der eine Abschnitt des Federelementes im Bereich der Bandführung an der Schichtseite des Magnetbandes anliegt, ist ausserdem eine sichere Kontaktgabe zu dieser Schichtseite und damit ein einwandfreies Abführen elektrostatischer Aufladungen von derselben gewährleistet.

Als sehr vorteilhaft hat sich erwiesen, wenn das Federelement als Blattfeder ausgebildet ist, die mindestens zwei von einem Basisteil auskragende, mit Abstand zueinander im wesentlichen parallel verlaufende Arme aufweist, welche die beiden Abschnitte des Federelementes bilden, wobei der eine Arm tangential an der Schichtseite des Magnetbandes und der andere Arm neben dem Magnetband tangential an der Bandführung selbst anliegt und der Basisteil zur Anordnung des Federelementes innerhalb der Magnetbandkassette vorgesehen ist. Ein solches Federelement ist in seinem Aufbau sehr einfach und gewährleistet eine gute elektrische Kontaktgabe einerseits zur Schichtseite des Magnetbandes und andererseits zur Bandführung. Zur Anordnung des Federelementes innerhalb der Magnetbandkassette kann der Basisteil des Federelementes beispielsweise an der Innenseite des Gehäuses der Magnetbandkassette angenietet sein oder in entsprechende Schlitze eingesetzt werden, die ihn dann in seiner Lage festlegen.

Bei einer Magnetbandkassette, die im Bereich der Bandführung eine quer zu derselben verlaufende Oeffnung in der benachbarten Kassettenwand aufweist, hat sich weiters als vorteilhaft erwiesen, wenn der Basisteil bis zu den freien Enden der beiden Arme reichend, streifenförmig ausgebildet ist, die Arme durch Ausstanzungen von ihm freigestellt sind und mit ihren freien Enden in gleicher Richtung zur Bandführung hin aus seiner Streifenfläche vorspringen, weiters der Basisteil an seinem, den freien Enden der Arme benachbarten Ende mindestens eine U-förmige Abwinkelung aufweist, und das Federelement von ausserhalb der Magnetbandkassette her in die Oeffnung der Kassettenwand einführbar ist, wobei sich die U-förmige Abwinkelung des Basisteiles an einem korrespondierenden Profil der Kassettenwand verklammert. Auf diese Weise wird eine besonders einfache Anordnung des Federelementes innerhalb der Magnetbandkassette erhalten, da es nur in die bereits fertig montierte Magnetbandkassette von aussen her einzusetzen ist, wodurch auch ein nachträglicher Einbau in bereits bestehende Magnetbandkassetten möglich wird.

In diesem Zusammenhang hat sich auch als vorteilhaft erwiesen, wenn der Basisteil einen weiteren, durch Ausstanzungen von ihm freigestellten, aus seiner Streifenfläche vorspringenden Arm aufweist, dessen freies Ende bei in die Oeffnung der Kassettenwand eingeführtem Federelement einen magnetbandkassettenseitigen Anschlag hintergreift. Hierdurch wird eine Verriegelung eines in eine Magnetbandkassette eingesetzten Federelementes erreicht, so dass es nicht ungewollt von derselben gelöst werden kann.

Ebenfalls als vorteilhaft hat sich erwiesen, wenn sich der Basisteil mit dem von der U-förmigen Abwinkelung abgewandten Ende im Inneren der Magnetbandkassette federnd abstützt. Durch eine solche Abstützung wird eine sichere Lage des Federelementes und eine besonders gute Kontaktgabe der Arme des Federelementes mit der Schichtseite des Magnetbandes und der Bandführung erreicht.

Ein sehr einfacher Aufbau für ein Federelement wird auch erhalten, wenn das Federelement durch eine Feder mit zwei zueinander hin vorgespannten Schenkeln gebildet ist, deren Schenkel die beiden Abschnitte des Federelementes bilden, wobei der eine Schenkel tangential an der Schichtseite des Magnetbandes und der andere Schenkel neben dem Magnetband vorbei verlaufend tangential an der Bandführung selbst anliegt und der die beiden Schenkel verbindende Mittelteil der Feder innerhalb der Magnetbandkassette abgestützt ist.

Ebenfalls als vorteilhaft hinsichtlich eines einfachen Aufbaues des Federelementes hat sich erwiesen, wenn das Federelement als L-förmiger Winkel ausgebildet ist, dessen beide Schenkel die beiden Abschnitte des Federelementes bilden, wobei der eine Schenkel in axialer Richtung der Bandführung verlaufend an der Schichtseite des Magnetbandes und der andere Schenkel axial seitlich an der Bandführung selbst anliegt.

Als vorteilhaft hat sich auch erwiesen, wenn der an der Schichtseite des Magnetbandes anliegende Abschnitt des Federelementes im Bereich der Längssymmetrieebene des Magnetbandes an dessen Schichtseite anliegt. Damit ist sichergestellt, dass das Federelement symmetrisch auf das Magnetband einwirkt, so dass es zu keiner ungewollten Beeinflussung des Bandlaufes kommen kann.

Ein einfacher Aufbau für ein Federelement wird aber auch erhalten, wenn die beiden Abschnitte des Federelementes gemeinsam durch eine streifenförmige Federzunge gebildet sind, die sowohl in einem Randbereich des Magnetbandes an dessen Schichtseite als auch neben diesem Randbereich an der Bandführung selbst anliegt. Beispielsweise kann ein solches Federelement auch symmetrisch ausgebildet werden, wobei dann je eine von zwei streifenförmigen Federzungen in einem der beiden Randbereiche des Magnetbandes an dessen Schichtseite und auch neben diesem Randbereich an der Bandführung selbst anliegt.

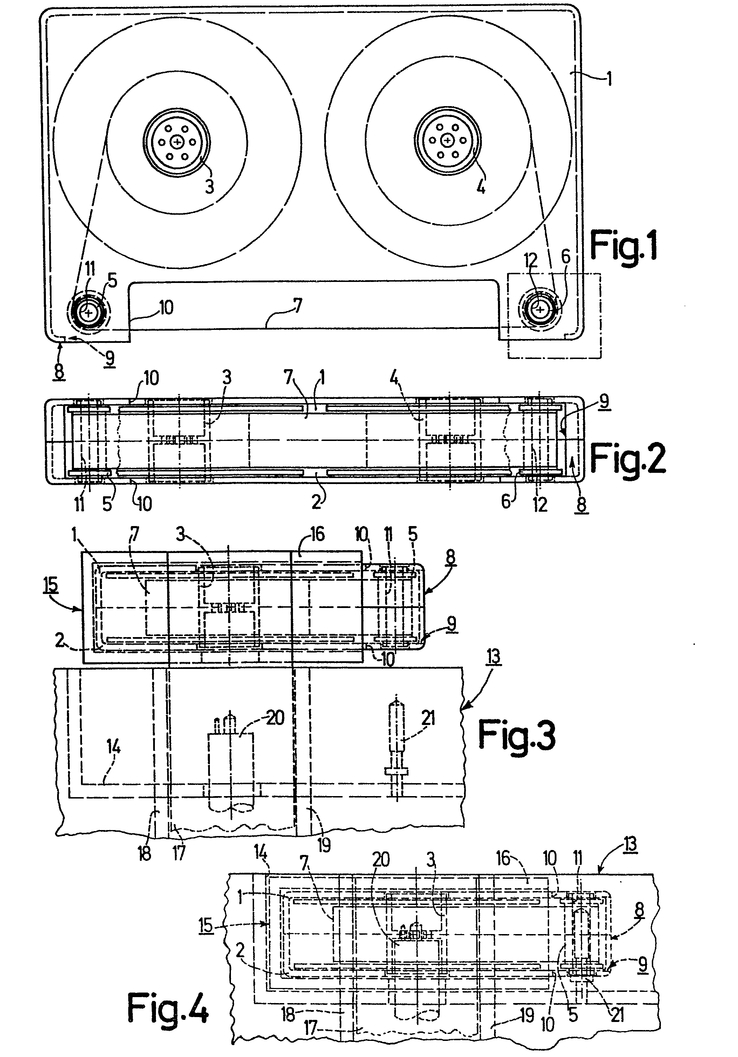

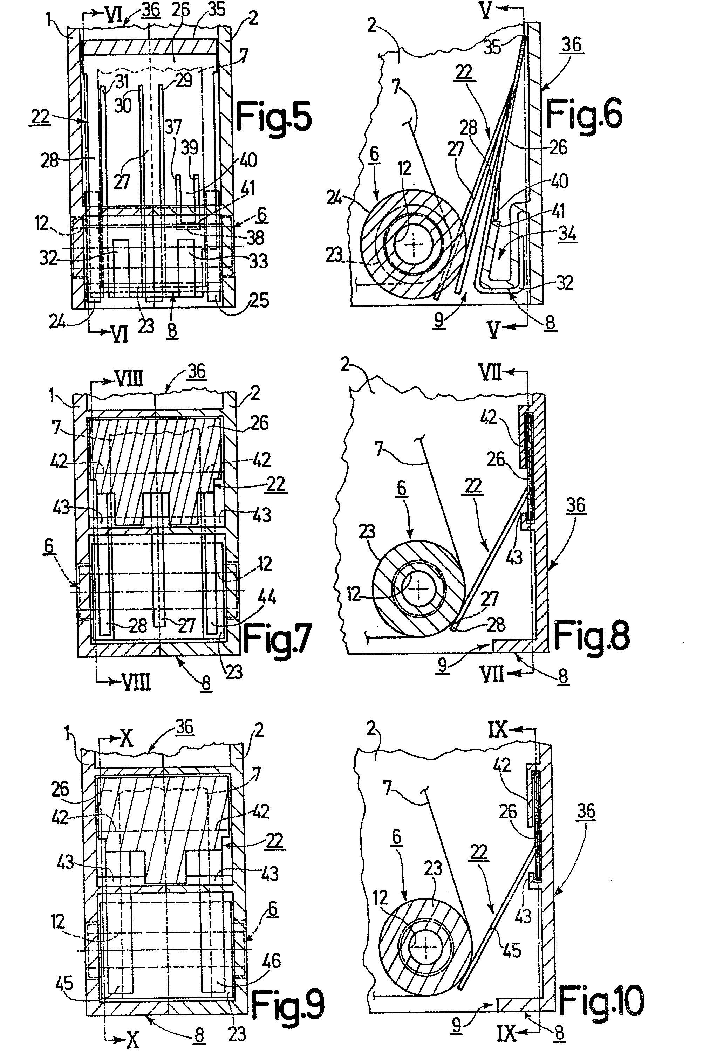

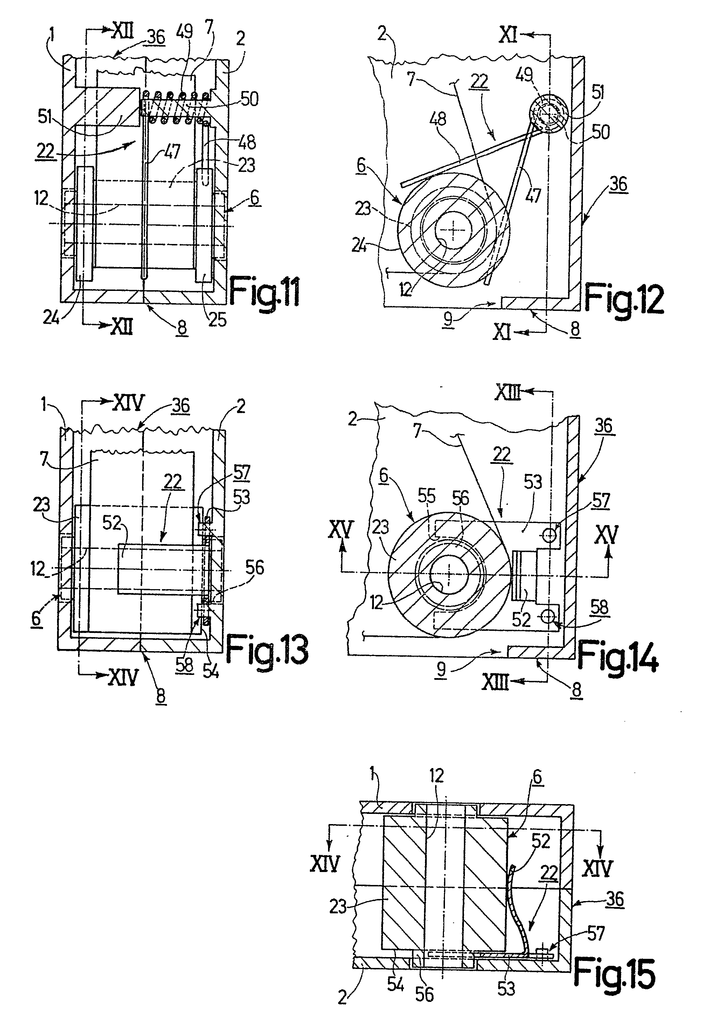

Die Erfindung wird im folgenden anhand der Zeichnungen, in welchen Ausführungsformen des Standes der Technik und einige Ausführungsbeispiele der Erfindung dargestellt sind, auf welch letztere sie jedoch nicht beschränkt sein soll, näher erläutert. Fig. 1 zeigt schematisch eine bekannte Magnetbandkassette in Draufsicht auf eine ihrer beiden Hauptflächen. Fig. 2 zeigt die Magnetbandkassette nach Fig. 1 in Seitenansicht auf eine mit einer Oeffnung versehene Schmalseite der Kassette. Fig. 3 zeigt schematisch in Seitenansicht eine bekannte Einrichtung eines Magnetbandgerätes zum Einsetzen einer Magnetbandkassette in dasselbe, wobei sich die hierfür vorgesehene Kassettenaufnahme in ihrer gegenüber dem Gerät angehobenen Lage befindet und eine Magnetbandkassette in sie eingeführt ist. Fig. 4 zeigt die Einrichtung nach Fig. 3 mit in das Gerät abgesenkter Kassettenaufnahme, wobei sich die in sie eingeführte Magnetbandkassette in ihrer Betriebslage befindet. Fig. 5 zeigt den in Fig. 1 durch strichpunktierte Linien angedeuteten, im Bereich einer Bandführung liegenden Teilausschnitt einer Magnetbandkassette in geschnittener Seitenansicht, gemäss einem ersten Ausführungsbeispiel der Erfindung mit einem Federelement, dass von ausserhalb der Magnetbandkassette in diese eingesetzt ist und das durch eine Blattfeder gebildet ist, die einen Basisteil aufweist, aus dem drei Arme vorspringen, von denen einer zur Sicherung des Federelementes in der Magnetbandkassette dient und die beiden anderen, die zur Kontaktgabe vorgesehenen Abschnitte des Federelementes bilden. Fig. 6 zeigt den Teilausschnitt nach Fig. 5 in geschnittener Draufsicht nach der Linie VI-VI in Fig. 5. Fig. 7 zeigt in der gleichen Darstellungsweise wie Fig. 5 ein zweites Ausführungsbeispiel der Erfindung mit einem Federelement, das aus einer Blattfeder besteht, von der ein Basisteil in taschenförmige Ausnehmungen am Gehäuse der Magnetbandkassette eingesetzt ist und von dem Arme auskragen, welche die zur Kontaktgabe vorgesehenen Abschnitte des Federelementes bilden. Fig. 8 zeigt den Teilausschnitt nach Fig. 7 in geschnittener Draufsicht nach der Linie VIII-VIII in Fig. 7. Fig. 9 zeigt eine Abwandlung des Ausführungsbeispieles nach Fig. 7, bei dem je zwei zur Kontaktgabe vorgesehene Abschnitte des Federelementes gemeinsam durch eine streifenförmige Federzunge gebildet sind. Fig. 10 zeigt den Teilausschnitt nach Fig. 9 in geschnittener Draufsicht nach der Linie X-X in Fig. 9. Fig. 11 zeigt in der gleichen Darstellungsweise wie Fig. 5 ein weiteres Ausführungsbeispiel der Erfindung mit einem Federelement, das durch eine Feder mit zwei zueinander hin vorgespannten Schenkeln gebildet ist. Fig. 12 zeigt den Teilausschnitt nach Fig. 11 in geschnittener Draufsicht nach der Linie XII-XII in Fig. 11. Fig. 13 zeigt in der Darstellungweise wie Fig. 5 noch ein weiteres Ausführungsbeispiel der Erfindung mit einem Federelement, das als L-förmiger Winkel ausgebildet ist. Fig. 14 zeigt den Teilausschnitt nach Fig. 13 in geschnittener Draufsicht nach der Linie XIV-XIV in Fig. 13. Fig. 15 zeigt den Teilausschnitt nach Fig. 13 in einer weiteren geschnittenen Seitenansicht nach der Linie XV-XV in Fig. 14.

In den Figuren 1 und 2 ist eine Magnetbandkassette dargestellt, die zwei Gehäuseschalen 1 und 2 aufweist, innerhalb welcher zwei Wickelkerne 3 und 4 und zwei als Rollen ausgebildete Bandführungen 5 und 6 untergebracht sind. Ein Magnetband 7 verläuft vom Wickelkern 3 über die Bandführung 5 entlang einer in einer durch die beiden Gehäuseschalen eine Schmalseite bildenden Kassettenwand 8 der Magnetbandkassette vorgesehenen Oeffnung 9 zur Bandführung 6 und von dieser zum Wickelkern 4. Das Magnetband ist dabei mit seiner Schichtseite der Oeffnung 9 zugewandt, was bedeutet, dass es mit seiner Trägerseite über die Bandführungen 5 und 6 läuft. In den beiden Hauptflächen der Gehäuseschalen 2 und 3 ist ebenfalls je eine in die Oeffnung 9 übergehende Oeffnung 10 vorgesehen, die das Magnetband von seiner Trägerseite her freistellen. Auf diese Weise kann das Magnetband 7 im Bereich der Oeffnungen 9 und 10 erfasst und aus der Magnetbandkassette herausgezogen werden, um es mit seiner Schichtseite mit Magnetköpfen in Wirkverbindung zu bringen, die beispielsweise eine rotierende Magnetkopfanordnung bilden können, wie dies bei Magnetbandgeräten zur Aufzeichnung und/oder Wiedergabe von Fernsehsignalen üblich ist. An sich wäre es aber auch möglich, Magnetköpfe in die Oeffnung 9 einzuführen, um sie mit der Schichtseite des Magnetbandes in Wirkverbindung zu bringen. Der Antrieb des Magnetbandes erfolgt in üblicher Weise mit einer Antriebswelle und einer Andruckrolle, die mit dem Magnetband in Wirkverbindung gebracht werden, sei es innerhalb oder ausserhalb der Magnetbandkassette.

Um mit einer solchen Magnetbandkassette exakt Aufzeichnungen oder Wiedergaben durchführen zu können, kommt bekanntlich einem genau definierten Verlauf des Magnetbandes besondere Bedeutung zu. Demgemäss sind die Bandführungen 5 und 6 mit begrenztem Spiel beweglich innerhalb der Magnetbandkassette angeordnet und mit mindestens einer von ausserhalb der Magnetbandkassette zugänglichen und axial verlaufenden Ausnehmung 11 bzw. 12 versehen, mit welchen sie, bei in das Magnetbandgerät eingesetzter Magnetbandkassette, auf einem geräteseitigen Positionierstift aufsitzen, so dass ihre Lage genau festgelegt ist. Die Ausnehmungen 11 bzw. 12 können dabei als beidseitige Sackbohrungen oder als durchgehende Bohrungen ausgebildet sein, damit die Magnetbandkassette auch gewendet werden kann. Da die Bandführungen wie erwähnt den Bandlauf wesentlich mitbestimmen, werden sie zur Erzielung der entsprechenden Formgenauigkeit üblicherweise aus einem metallischen Werkstoff, der dann auch elektrisch leitend ist, hergestellt. Das gleiche gilt für die geräteseitigen Positionierstifte, die üblicherweise ebenfalls aus einem elektrisch leitenden, metallischen Werkstoff hergestellt und am Chassis des Gerätes angeordnet werden. Damit liegen diese Positionierstifte elektrisch gesehen am geräteseitigen Bezugspotential, was dann auch für die Bandführungen gilt, wenn diese auf den Positionierstiften aufsitzen, da hierbei ein elektrisch leitender Kontakt zwischen ihnen und den Positionierstiften gebildet wird.

Das Einsetzen einer Magnetbandkassette in ein Magnetbandgerät soll beispielsweise anhand der Figuren 3 und 4 erläutert werden. In diesen Figuren ist mit 13 ein Ausschnitt eines Magnetbandgerätes bezeichnet, das eine schachtförmige Vertiefung 14 aufweist, aus der heraus bzw. in die hinein eine Kassettenaufnahme 15 verstellbar ist, was von Hand aus oder motorisch geschehen kann. Die Kassettenaufnahme weist ein Kassettenfach 16 auf, in das eine Kassette mit ihrer längeren geschlossenen Schmalseite voran einschiebbar ist, wenn sich die Kassettenaufnahme in ihrer aus der Vertiefung 14 herausgeführten Lage befindet, wie dies Fig. 3 zeigt. Mit dem Kassettenfach 16 ist seitlich je eine Führungsleiste 17 verbunden, die zwischen geräteseitigen Führungsschienen 18 und 19 verläuft, wodurch die Verstellbewegung der Kassettenaufnahme festlegt ist. Aus der Vertiefung 14 des Gerätes ragen antreibbare Wickeldorne 20 und feststehende Positionierstifte 21 hervor, von welchen in den Figuren 3 und 4 nur je einer sichtbar ist. Wird nun die Kassettenaufnahme mit einer in ihr Kassettenfach eingeführten Magnetbandkassette aus der in Fig. 3 gezeigten Lage in die
Vertiefung 14 hinein abgesenkt, so gelangt die
Magnetbandkassette in ihre Betriebslage, wobei
in üblicher Weise die Wickeldorne 20 mit den
Wickelkernen 3 bzw. 4 in Wirkverbindung kommen und die Positionierstifte 21 in die Ausnehmungen 11 bzw. 12 der Bandführungen 5
bzw. 6 eintreten und diese dann auf ihnen aufsitzen, so dass sie exakt positioniert sind. In der
Betriebslage der Magnetbandkassette ist damit
ein elektrisch leitender Kontakt zwischen den
Positionierstiften und den Bandführungen
hergestellt.

Die Bildung eines solchen elektrisch leitenden
Kontaktes zwischen einem Positionierstift und
der auf ihm sitzenden Bandführung, bei sich in
der Betriebslage befindender Magnetbandkassette, wird nun erfindungsgemäss dazu ausgenützt, um auf einfache Weise elektrostatische
Aufladungen der Schichtseite des Magnetbandes
wieder abzuleiten. Hierzu ist mindestens einer der
beiden Bandführungen 5 bzw. 6 ein elektrisch
leitendes Federelement zugeordnet, das im wesentlichen der Schichtseite des Magnetbandes
gegenüberliegend innerhalb der Magnetbandkassette angeordnet ist und das mindestens zwei
Abschnitte aufweist, von welchen einer im Bereich der Bandführung an der Schichtseite des
Magnetbandes anliegt und der andere in elektrisch leitendem Kontakt mit der Bandführung
steht. Im folgenden werden hierfür verschiedene
Ausführungsformen im Zusammenhang mit der
Bandführung 6 beschrieben. Die gleichen Massnahmen können aber auch im Zusammenhang
mit der Bandführung 5 oder auch mit beiden
Bandführungen 5 und 6 getroffen werden.

Beim Ausführungsbeispiel nach den Figuren 5
und 6 ist ein Federelement 22 vorgesehen, das
mit einer Bandführung 6 zusammenwirkt, die hier
als Rolle 23 mit seitlich des Magnetbandes 7
verlaufenden Flanschen 24 und 25 ausgebildet
ist. Das Federelement 22 besteht aus einer Blattfeder, die einen Basisteil 26 aufweist, von dem mit
Abstand zueinander zwei parallel verlaufende
Arme 27 und 28 auskragen, welche die beiden zur
Kontaktgabe vorgesehenen Abschnitte des Federelementes bilden und von denen der eine Arm 27
im Bereich der Bandführung 6 in der Längssymmetrieebene des Magnetbandes 7 tangential
an der Schichtseite desselben und der andere
Arm 28 neben dem Magnetband 7 tangential am
Flansch 24 der Bandführung 6 anliegt. Auf diese
Weise ist eine elektrisch leitende Verbindung
zwischen der Schichtseite des Magnetbandes 7
zur Bandführung 6 hergestellt, die dann
ihrerseits, bei sich in der Betriebslage befindender Magnetbandkassette, mit dem geräteseitigen Positionierstifte 21 elektrisch leitend verbunden ist, wodurch elektrostatische Aufladungen der Schichtseite des Magnetbandes über
die vorstehend beschriebene elektrische Verbindung zum Bezugspotential abgeleitet werden.

Beim vorliegenden Ausführungsbeispiel ist der
Basisteil 26 bis zu den freien Enden der Arme 27
und 28 reichend, streifenförmig ausgebildet, wobei die beiden Arme 27 und 28 durch Ausstanzungen 29, 30 und 31 von ihm freigestellt sind
und in gleicher Richtung zur Bandführung 6 hin
aus seiner Streifenfläche vorspringen. Weiters
weist der Basisteil 26 an seinem den freien Enden
der Arme 27 und 28 benachbarten Ende zwei U-
förmige Abwinkelungen 32 und 33 auf, die zur
Anordnung des Federelementes innerhalb der
Magnetbandkassette dienen. Hierzu wird das Federelement 22 mit dem Basisteil 26 voran, von
ausserhalb der Magnetbandkassette her, in deren
Oeffnung 9 eingeführt, bis sich die beiden U-
förmigen Abwinkelungen 32 und 33 an einem
korrespondierenden Profil 34 der durch die beiden Gehäuseschalen 2 und 3 gebildeten
Kassettenwand 8 verklammern und dabei das
Federelement als Ganzes innerhalb der
Magnetbandkassette positionieren und an
derselben festhalten. Bei diesem Einführen des
Federelementes in die Oeffnung 9 der
Magnetbandkassette legt sich dessen Arm 27 im
Bereich der Bandführung 6 tangential an die
Schichtseite des Magnetbandes 7 und dessen
Arm 28 an den Flansch 24 der Bandführung 6 an
und stellt damit die elektrisch leitende Verbindung zwischen beiden Teilen her. Selbstverständlich kann das zu den beiden U-förmigen
Abwinkelungen 22 und 23 des Basisteiles 26
korrespondierende Profil der die Oeffnung 9 aufweisenden Kassettenwand 8 auch noch durch
andere Formgebungen dieser Kassettenwand gebildet werden ; so können sich beispielsweise die
U-förmigen Abwinkelungen 32 und 33 auch unmittelbar an einer durch die die Oeffnung 9
aufweisenden Kassettenwand 8 gebildeten Ecke
der Magnetbandkassette verklammern.

Wie aus Fig. 6 ersichtlich ist, stützt sich bei
vollständig in die Oeffnung 9 der Magnetbandkassette eingeführtem Federelement 22 der Basisteil 26 mit seinem von den U-förmigen Abwinkelungen 32 und 33 abgewandten Ende 35 im
Inneren der Magnetbandkassette federnd ab, dadurch dass dieses Ende an der an die
Kassettenwand 8 anschliessenden Kassettenwand 36 anliegt. Auf diese Weise wird eine
besonders sichere Lage des Federelementes innerhalb der Kassette und ein genau definierter
Anpressdruck der Arme 27, 28 an ihren Auflagefläche erreicht, wodurch eine gute und stabile
Kontaktgabe durch das Federelement gewährleistet ist.

Beim vorliegenden Ausführungsbeispiel weist
der Basisteil 26 des Federelementes 22 einen
weiteren, durch Ausstanzungen 37, 38 und 39 von
ihm freigestellten, aus seiner Streifenfläche vorspringenden Arm 40 auf, dessen freies Ende, bei
in die Oeffnung 9 der Kassettenwand 8 eingeführtem Federelement, einen durch einen Abschnitt
der Kassettenwand 8 gebildeten Anschlag 41
hintergreift, wie dies insbesondere Fig. 6 erkennen lässt. Hierdurch erfolgt eine Verriegelung
des in die Magnetbandkassette eingesetzten Federelementes, so dass es nicht ungewollt von
derselben gelöst werden kann, womit eine besonders sichere Lage des Federelementes gewährleistet ist. Beim vorliegenden Ausführungsbeispiel spring der Arm 40 in entgegengesetzter Richtung zu den Armen 27 und 28 aus der Streifenfläche des Basisteiles 26 vor. Es kommen aber auch derartige Verriegelungen in Betracht, bei welchen der Arm 40 gleich orientiert ist wie die Arme 27 und 28, wenn beispielsweise ein separater magnetbandkassettenseitiger Anschlag für das freie Ende des Armes 40 vorgesehen ist.

Beim Ausführungsbeispiel nach den Figuren 7 und 8 weist das wieder durch eine Blattfeder gebildete Federelement 22 einen Basisteil 26 auf, der zur Anordnung des Federelementes innerhalb der Magnetbandkassette dient. Hierzu sind hier an der durch die Gehäuseschalen 2 und 3 gebildeten Kassettenwand 36 taschenförmige Ansätzes 42 und 43 vorgesehen, in die das Federelement bei der Montage der Magnetbandkassette mit seinem Basisteil 26 eingesetzt wird. Die zur Kontaktgabe vorgesehenen Abschnitte des Federelementes sind wieder durch vom Basisteil 26 auskragende, mit Abstand zueinander parallel verlaufende Arme gebildet, wobei hier drei Arme 27, 28 und 44 vorgesehen sind. Der Arm 27 liegt analog wie beim Ausführungsbeispiel nach den Figuren 5 und 6 im Bereich der Bandführung 6, die hier als einfache Rolle 23 ausgebildet ist, in der Längssymmetrieebene des Magnetbandes 7 tangential an der Schichtseite desselben an. Zur Kontaktgabe mit der Bandführung 6 sind hier zwei Arme vorgesehen, nämlich die Arme 27 und 44, die je symmetrisch zum Arm 28 neben dem Magnetband 7 an der Rolle 23 selbst tangential anliegen. Auf diese Weise ist wieder eine elektrische Verbindung zwischen der Schichtseite des Magnetbandes und der Bandführung hergestellt. Durch das vollkommen symmetrische Angreifen der Arme am Magnetband und der Bandführung ist sichergestellt, dass der Bandlauf selbst keinesfalls ungünstig beeinflusst wird.

Das Federelement 22 beim Ausführungsbeispiel nach den Figuren 9 und 10 ist ebenfalls als Blattfeder mit einem Basisteil 26 ausgebildet, der in der gleichen Weise wie beim Ausführungsbeispiel nach den Figuren 7 und 8 innerhalb der Magnetbandkassette in seiner Lage festgelegt ist. Hier sind jedoch die zur Kontaktgabe vorgesehenen beiden Abschnitte des Federelementes gemeinsam durch eine streifenförmige Federzunge 45 bzw. 46 gebildet, die sowohl in einem Randbereich des Magnetbandes 7 an dessen Schichtseite als auch neben diesem Randbereich an der Bandführung 6 selbst anliegt. Wie aus Fig. 9 ersichtlich ist, sind beim vorliegenden Ausführungsbeispiel zwei derartige Federzungen 45 und 46 vorgesehen, von welchen je eine mit einem der beiden Randbereiche des Magnetbandes und der neben dem betreffenden Randbereich verlaufenden Bandführung 6 zusammenwirkt, wodurch wieder eine symmetrische Anordnung vorliegt, die sich keinesfalls ungünstig auf den Bandlauf auswirken kann. An sich wäre es aber auch möglich, nur eine von den zwei Federzungen vorzusehen. Sollte in einem solchen Fall, bei entsprechendem Anpressdruck, ein Einfluss auf den Bandlauf erfolgen, der sich bekanntlich dahingehend auswirken würde, dass das Magnetband eine Tendenz zeigt in axialer Richtung der Bandführung auszuwandern, so könnte dies dazu benützt werden, um das Magnetband mit dem betreffenden Randbereich zwangsweise an einer separaten seitlichen Bandführung in Anlage zu halten. Beim vorliegenden Ausführungsbeispiel ist die Bandführung 6 wieder als einfache Rolle 23 ausgebildet, womit sich für die Federzungen 45 und 46 der Uebergang vom Randbereich des Magnetbandes zur Rolle 23 selbst sehr einfach gestaltet, da sie eben ausgebildet sein können. Bei beispielsweise entsprechender Profilierung der Federzungen können aber auch Bandführungen mit Flanschen zur Anwendung kommen.

In den Figuren 11 und 12 ist ein Ausführungsbeispiel dargestellt, bei dem das Federelement 22 durch eine Feder mit zwei zueinander hin vorgespannten Schenkeln 47 und 48 gebildet ist, deren Schenkel die beiden zur Kontaktgabe vorgesehenen Abschnitte des Federelementes bilden, wobei der eine Schenkel 47 im Bereich der Bandführung 6 tangential an der Schichtseite des Magnetbandes 7 und der andere Schenkel 48 neben dem Magnetband 7 vorbei verlaufend tangential an der Bandführung 6 selbst anliegt, nämlich hier am Flansch 25 derselben. Durch die zueinander hin gerichtete Vorspannung der beiden Schenkel 47 und 48 liegen diese einerseits am Magnetband und andererseits an der Bandführung sicher an, wodurch beiderseits eine einwandfreie elektrische Kontaktgabe gewährleistet ist. Im vorliegenden Fall ist die Feder als Schraubenfeder ausgebildet, deren die beiden Schenkel 47 und 48 verbindender Mittelteil 49 zur Abstützung der Feder innerhalb der Magnetbandkassette dient, wozu dieser Mittelteil 49 auf einen stiftförmigen Ansatz 50 an der Gehäuseschale 3 der Magnetbandkassette aufgeschoben ist. Ein an der anderen Gehäuseschale 2 korrespondierend vorgesehener Ansatz 51 sichert die Lage der Feder am Ansatz 50. Selbstverständlich ist es nicht zwingend notwendig, dass die Feder als Schraubenfeder ausgebildet ist; so könnte sie beispielsweise auch aus einer entsprechend geformten und vorgespannten Blattfeder bestehen.

Beim Ausführungsbeispiel nach den Figuren 13, 14 und 15 ist das Federelement 22 als L-förmiger Winkel ausgebildet, dessen beide Schenkel 52 und 53 die beiden zur Kontaktgabe vorgesehenen Abschnitte des Federelementes bilden, wobei der eine Schenkel 52 in axialer Richtung der Bandführung 6 verlaufend an der Schichtseite des Magnetbandes 7 und der andere Schenkel 53 axial seitlich an der, hier beispielsweise wieder durch eine einfache Rolle 23 gebildeten Bandführung 6 selbst anliegt. Der Schenkel 52 ist hierbei, wie insbesondere Fig. 15 deutlich erkennen lässt, S-förmig gebogen, um eine sichere Kontaktgabe zur Schichtseite des Magnetbandes zu gewährleisten. Der Schenkel 53 verläuft zwischen der Hauptfläche der Gehäuseschale 3 und der derselben zugewandten axialen Seitenfläche 54 der Rolle 23, wobei er mit einer U-förmigen Ausnehmung 55 den betreffenden Achsstummel 56 der Rolle 23 umgreift. Auf diese Weise gleitet die Rolle 23 bei ihrer Drehung mit ihrer Seitenfläche 54 am Schenkel 53 des Federelementes, wodurch auch zwischen diesen beiden Teilen eine sichere Kontaktgabe vorliegt. Die Befestigung des Federelementes 22 innerhalb der Magnetbandkassette erfolgt hier durch Nietverbindungen 57 und 58, die den Schenkel 53 an der Gehäuseschale 3 festlegen.

Wie aus vorstehendem ersichtlich, gibt es eine Reihe von Abwandlungen der beschriebenen Ausführungsbeispiele, ohne dass dabei der Rahmen der Erfindung verlassen wird. Dies gilt insbesondere für die Ausgestaltung des Federelementes und dessen Anordnung innerhalb der Magnetbandkassette sowie die Ausbildung der Bandführung, die beispielsweise auch als nicht drehbarer Bauteil mit zylinderförmiger Mantelfläche ausgeführt sein kann.

**Patentansprüche**

1. Magnetbandkassette für ein Magnetbandgerät, die mindestens eine elektrisch leitende, mit einem begrenzten Spiel beweglich angeordnete, zylinderförmige, mit mindestens einer von ausserhalb der Magnetbandkassette zugänglichen und axial verlaufenden Ausnehmung versehene Bandführung (5, 6) aufweist, über deren Mantelfläche abschnittsweise das Magnetband (7) mit seiner Trägerseite verläuft, wobei bei in das Magnetbandgerät eingesetzter Magnetbandkassette die Bandführung mit ihrer Ausnehmung auf einem geräteseitigen, elektrisch leitenden, am geräteseitigen Bezugspotential liegenden Positionierstift (21) sitzt und wobei der Bandführung ein elektrisch leitendes Federelement (22) zugeordnet ist, dadurch gekennzeichnet, dass das Federelement (22) der Schichtseite des Magnetbandes gegenüberliegend innerhalb der Magnetbandkassette angeordnet ist und mindestens zwei Abschnitte aufweist, von welchen einer im Bereich der Bandführung an der Schichtseite des Magnetbandes (7) anliegt und der andere in elektrisch leitendem Kontakt mit der Bandführung (5, 6) steht.

2. Magnetbandkassette nach Anspruch 1, dadurch gekennzeichnet, dass das Federelement als Blattfeder ausgebildet ist, die mindestens zwei von einem Basisteil (26) auskragende, mit Abstand zueinander im wesentlichen parallel verlaufende Arme (27, 28) aufweist, welche die beiden Abschnitte des Federelementes bilden, wobei der eine Arm tangential an der Schichtseite des Magnetbandes und der andere Arm neben dem Magnetband tangential an der Bandführung (6) selbst anliegt und der Basisteil zur Anordnung des Federelementes innerhalb der Magnetbandkassette vorgesehen ist.

3. Magnetbandkassette nach Anspruch 2, die im Bereich der Bandführung eine quer zu derselben verlaufende Oeffnung (9) in der benachbarten Kassettenwand aufweist, dadurch gekennzeichnet, dass der Basisteil (26) bis zu den freien Enden der beiden Arme reichend, streifenförmig ausgebildet ist, dass die Arme durch Ausstanzungen (29, 30, 31) von ihm freigestellt sind und mit ihren freien Enden in gleicher Richtung zur Bandführung hin aus seiner Streifenfläche vorspringen, dass weiters der Basisteil an seinem, den freien Enden der Arme benachbarten Ende mindestens eine U-förmige Abwinkelung (32, 33) aufweist, und dass das Federelement (22) von ausserhalb der Magnetbandkassette her in die Oeffnung der Kassettenwand einführbar ist, wobei sich die U-förmige Abwinkelung des Basisteiles an einem korrespondierenden Profil (34) der Kassettenwand verklammert.

4. Magnetbandkassette nach Anspruch 3, dadurch gekennzeichnet, dass der Basisteil einen weiteren, durch weitere Ausstanzungen (37, 38, 39) von ihm freigestellten, aus seiner Streifenfläche vorspringenden Arm aufweist, dessen freies Ende bei in die Oeffnung der Kassettenwand eingeführtem Federelement einen magnetbandkassettenseitigen Anschlag (41) hintergreift.

5. Magnetbandkassette nach Anspruch 3 oder 4, dadurch gekennzeichnet, dass sich der Basisteil (26) mit dem von der U-förmigen Abwinkelung (32, 33) abgewandten Ende im Inneren der Magnetbandkassette federnd abstützt.

6. Magnetbandkassette nach Anspruch 1, dadurch gekennzeichnet, dass das Federelement (22) durch eine Feder mit zwei zueinander hin vorgespannten Schenkeln (47, 48) gebildet ist, deren Schenkel die beiden Abschnitte des Federelementes bilden, wobei der eine Schenkel tangential an der Schichtseite des Magnetbandes und der andere Schenkel neben dem Magnetband vorbei verlaufend tangential an der Bandführung (6) selbst anliegt und der die beiden Schenkel verbindende Mittelteil (49) der Feder innerhalb der Magnetbandkassette abgestützt ist.

7. Magnetbandkassette nach Anspruch 1, dadurch gekennzeichnet, dass das Federelement (22) als L-förmiger Winkel ausgebildet ist, dessen beide Schenkel (52, 53) die beiden Abschnitte des Federelementes bilden, wobei der eine Schenkel in axialer Richtung der Bandführung verlaufend an der Schichtseite des Magnetbandes und der andere Schenkel axial seitlich an der Bandführung selbst anliegt.

8. Magnetbandkassette nach einem der vorhergehenden Ansprüche, dadurch gekennzeichnet, dass der an der Schichtseite des Magnetbandes anliegende Abschnitt des Federelementes (22) im Bereich der Längssymmetrieebene des Magnetbandes an dessen Schichtseite anliegt.

9. Magnetbandkassette nach Anspruch 1, dadurch gekennzeichnet, dass die beiden Abschnitte des Federelementes (22) gemeinsam durch eine streifenförmige Federzunge (45, 46) gebildet sind, die sowohl in einem Randbereich des Magnetbandes an dessen Schichtseite als auch neben diesem Randbereich an der Bandführung selbst anliegt.

## Claims

1. A magnetic-tape cassette for a magnetic-tape apparatus, which cassette comprises at least one electrically conductive cylindrical tape guide (5, 6) which is arranged to be movable to a limited extent and which is formed with at least one axial recess which is accessible from the exterior of the magnetic-tape cassette, the magnetic tape (7) passing with its base side along a part of the circumferential surface of said tape guide and an electrically conductive locating pin (21) which is arranged on the apparatus and which is at the reference potential of the apparatus engaging the recess in the tape guide upon insertion of the magnetic-tape cassette into the magnetic-tape apparatus, an electrically conductive resilient element (22) being associated with the tape guide, characterized in that the resilient element (22) is arranged inside the magnetic-tape cassette opposite the coating side of the magnetic tape and comprises at least two portions, of which one portion contacts the coating side of the magnetic tape (7) at the location of the tape guide and the other portion is in electrically conductive contact with the tape guide (5, 6).

2. A magnetic-tape cassette as claimed in claim 1, characterized in that the resilient element is a leaf spring, which comprises at least two spaced substantially parallel limbs (27, 28) which project from a main body (26) and which form the two portions of the resilient element, one limb being disposed tangentially against the coating side of the magnetic tape, the other limb being disposed tangentially against the tape guide (6) itself beside the magnetic tape, and the main body serving to arrange the resilient element inside the magnetic-tape cassette.

3. A magnetic-tape cassette as claimed in claim 2, in which the cassette wall adjacent the tape guide has an opening (9) which extends transversely of said tape guide, characterized in that the main body (26) is strip-shaped up to the free ends of the two limbs, the limbs are spaced from said body by punched-out portions (29, 30, 31), the free ends project from the major strip surface in the same direction towards the tape guide, the main body comprises at least one U-shaped angular portion (32, 33) at its end adjacent the free ends of the limbs, and the resilient element (22) can be inserted into the opening of the cassette wall from outside the magnetic-tape cassette, the U-shaped angular portion of the main body engaging a corresponding profile (34) of the cassette wall.

4. A magnetic-tape cassette as claimed in claim 3, characterized in that the main body comprises a further limb which projects from its major strip surface and which is spaced from said body by further punched-out portions (37, 38, 39), the free end of said further limb engaging behind a stop (41) on the magnetic-tape cassette upon insertion of the resilient element into the opening in the cassette wall.

5. A magnetic-tape cassette as claimed in claim 3 or 4, characterized in that the main body (26) is resiliently supported inside the magnetic-tape cassette with the end which is remote from the U-shaped angular portion (32, 33).

6. A magnetic-tape cassette as claimed in claim 1, characterized in that the resilient element (22) is a spring having two limbs (47, 48) which are biassed towards each other, which limbs constitute the two portions of the resilient element, one limb being disposed tangentially against the coating side of the magnetic tape, the other limb being disposed tangentially against the tape guide (6) itself beside the magnetic-tape, and the central portion (49) which interconnects the two limbs being supported inside the magnetic-tape cassette.

7. A magnetic-tape cassette as claimed in claim 1, characterized in that the resilient element (22) is an L-shaped element whose two limbs (52, 53) form the two portions of the resilient element, one limb which extends in the axial direction of the tape guide being disposed against the coating side of the magnetic tape, and the other limb being disposed against an axial end surface of the tape guide itself.

8. A magnetic-tape cassette as claimed in any one of the preceding claims, characterized in that the portion of the resilient element (22) which is in contact with the coating side of the magnetic tape is positioned against said coating side at the location of the longitudinal plane of symmetry of said tape.

9. A magnetic-tape cassette as claimed in claim 1, characterized in that the two portions of the resilient element (22) are together formed by a strip-shaped resilient tongue (45, 46) which is in contact with the coating side of the magnetic tape at an edge portion of said tape and which is in contact with the tape guide itself beside said edge portion.

## Revendications

1. Cassette de bande magnétique pour un appareil à bande magnétique qui comporte au moins un guide de bande (5, 6) conducteur électrique, monté mobile avec un jeu limité, cylindrique, pourvu d'au moins un évidement axial et accessible de l'extérieur de la cassette de bande magnétique, sur la surface périphérique duquel la bande magnétique (7) passe par sections par sa face de support, tandis que dans le cas d'une cassette de bande magnétique mise en place sur l'appareil à bande magnétique, le guide de bande est placé, par son évidement, sur un doigt de positionnement (22) conducteur électrique monté sur l'appareil et se trouvant au potentiel de référence de cet appareil et qu'au guide de bande est associé un élément à ressort conducteur électrique (22), caractérisée en ce que l'élément à ressort (22) est monté à l'intérieur de la cassette de bande magnétique en face de la face revêtue de la bande magnétique et comporte au moins deux sections dont l'une s'applique dans la zone du guide de bande contre la face revêtue de la bande magnétique (7) et l'autre est en contact de conduction électrique avec le guide de bande (5, 6).

2. Cassette de bande magnétique suivant la revendication 1, caractérisée en ce que l'élément à ressort a la forme d'un ressort à lame qui comprend au moins deux bras en substance parallèles espacés, qui partent d'une partie de base (26) et qui forment les deux sections de l'élément à ressort, le premier bras s'appliquant tangentiellement contre la face revêtue de la bande magnétique et l'autre bras s'appliquant, à côté de la bande magnétique, tangentiellement contre le guide de bande lui-même, tandis que la partie de base est prévue en vue du montage de l'élément à ressort à l'intérieur de la cassette de bande magnétique.

3. Cassette de bande magnétique suivant la revendication 2, qui, dans la zone du guide de bande, présente, dans la paroi voisine de la cassette, une ouverture (9) transversale au guide de bande, caractérisée en ce que la partie de base (26) a la forme d'une plaquette jusqu'aux extrémités libres des deux bras, que les bras sont dégagés de la plaquette par des incisions d'estampage (29, 30, 31) et font saillie par leurs extrémités libres dans le même sens vers le guide de bande sur sa surface de plaquette, que la partie de base présente, de plus, à son extrémité voisine des extrémités libres des bras, au moins une partie coudée en U 32, 33 et que l'élément à ressort (22) peut être introduit à partir de l'extérieur de la cassette de bande magnétique dans l'ouverture de la paroi de la cassette, la partie coudée en U de la partie de base enserrant un profilé (34) correspondant de la paroi de la cassette.

4. Cassette de bande magnétique suivant la revendication 3, caractérisée en ce que la partie de base comporte un autre bras qui en est dégagé par des incisions d'estampage (37, 38, 39) et fait saillie sur sa surface de plaquette, l'extrémité libre de ce bras s'accrochant derrière une butée (41) prévue sur la cassette de bande magnétique lorsqu'un élément à ressort est introduit dans l'ouverture de la paroi de la cassette.

5. Cassette de bande magnétique suivant la revendication 3 ou 4, caractérisée en ce que la partie de base (26) prend appui élastiquement, par son extrémité opposée à la partie coudée en U (32, 33), dans l'intérieur de la cassette de bande magnétique.

6. Cassette de bande magnétique suivant la revendication 1, caractérisée en ce que l'élément à ressort (22) est formé par un ressort comportant deux branches précontraintes l'une vers l'autre (47, 48), ces branches formant les deux sections de l'élément à ressort, la première branche s'applique tangentiellement contre la face revêtue de la bande magnétique et l'autre branche, qui s'étend à côté de la bande magnétique, s'appliquant tangentiellement contre le guide de bande (6) lui-même, tandis que la partie médiane (49) du ressort qui relie les deux branches prend appui à l'intérieur de la cassette de bande magnétique.

7. Cassette de bande magnétique suivant la revendication 1, caractérisée en ce que l'élément à ressort (22) a la forme d'une cornière dont les deux ailes (52, 53) forment les deux sections de l'élément à ressort, la première aile, qui s'étend dans le sens axial du guide de bande, s'appliquant contre la face revêtue de la bande magnétique et l'autre aile s'applique axialement et latéralement contre le guide de bande lui-même.

8. Cassette de bande magnétique suivant l'une quelconque des revendications précédentes, caractérisée en ce que la section de l'élément à ressort (22) appliquée contre la face revêtue de la bande magnétique est en contact avec cette face revêtue de la bande magnétique dans la zone de son plan de symétrie longitudinal.

9. Cassette de bande magnétique suivant la revendication 1, caractérisée en ce que les deux sections de l'élément à ressort (22) sont formées ensemble par une languette de ressort (45, 46) en forme de plaquette qui s'applique à la fois, dans une zone de rive de la bande magnétique, contre la face revêtue de celle-ci et, à côté de cette zone de rive, contre le guide de bande lui-même.

0 085 442

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15